# EUROPEAN PATENT SPECIFICATION

(11) **EP 2 884 857 B1**
(45) Date of publication and mention of the grant of the patent: **02.11.2016**
(21) Application number: 13753134.9
(22) Date of filing: 15.08.2013
(51) Int. Cl.: A23L 19/00, A23B 7/16

(54) **METHOD FOR PRODUCING A FOOD PRODUCT**
VERFAHREN ZUR HERSTELLUNG EINES LEBENSMITTELPRODUKTS
PROCÉDÉ DE PRODUCTION DÝUN PRODUIT ALIMENTAIRE

(30) Priority: 17.08.2012 EP 12180858
(43) Date of publication of application: 24.06.2015
(73) Proprietor: Novozymes A/S, 2880 Bagsvaerd (DK)
(72) Inventor: HENDRIKSEN, Hanne Vang, 2840 Holte (DK); MATSUI, Tomoko, Chiba-shi Chiba 261-0001 (JP)
(86) International application number: PCT/EP2013/067080
(87) International publication number: WO 2014/027063

(56) References cited:
- WO-A1-2004/026042
- WO-A1-2007/077546
- WO-A1-2008/110513
- WO-A1-2010/070010
- WO-A2-2008/151807
- US-A1- 2007 141 227
- HENDRIKSEN H V ET AL: "Evaluating the potential for enzymatic acrylamide mitigation in a range of food products using an asparaginase from Aspergillus oryzae", JOURNAL OF AGRICULTURAL AND FOOD CHEMISTRY, AMERICAN CHEMICAL SOCIETY, US, vol. 57, no. 10, 27 March 2009 (2009-03-27), pages 4168-4176, XP002575849, ISSN: 0021-8561, DOI: 10.1021/JF900174Q [retrieved on 2009-04-23]
- PEDRESCHI ET AL: "The effect of asparaginase on acrylamide formation in French fries", FOOD CHEMISTRY, ELSEVIER LTD, NL, vol. 109, no. 2, 28 December 2007 (2007-12-28), pages 386-392, XP022505550, ISSN: 0308-8146, DOI: 10.1016/J.FOODCHEM.2007.12.057

## Description

### Reference to sequence listing

This application contains a Sequence Listing in computer readable form. The computer readable form is incorporated herein by reference.

### FIELD OF THE INVENTION

The present invention relates to a method for producing a heat-treated vegetable-based food product which comprises treatment with asparaginase.

### BACKGROUND OF THE INVENTION

It is well known that acrylamide formation in heated food products may be reduced by a treatment reducing the amount of asparagine in the food materials, such as by subjecting the food materials to the action of the enzyme asparaginase (see e.g. WO2004/026042).

To fit into the production line of an industrial food product, treatment with asparaginase should preferentially take place during an existing step in the production process. It has so far been a challenge to fit asparaginase treatment into the existing industrial production process of, e.g., French fries. One reason being that known asparaginase enzymes may not be stable/active at the typical process temperatures used in an industrial process for production of French fries.

WO2004/026042 suggests that in the production of French fries, asparaginase may be added at any suitable stage of the process, such as, e.g., during blanching. However, for an asparaginase to be added during blanching, it should retain a major part of its activity at the high temperature used for blanching. Commercial asparaginase enzymes on the market today are inactivated at such high temperature.

WO 2008/110513 discloses a number of thermostable variants of asparaginase from *Aspergillus oryzae.* However, none of these variants are thermostable enough to be added, e.g., during blanching. Treatment of potato sticks for French fries for 5 min at 60°C is disclosed for one of the variants. But 60°C is not an optimal temperature to be used industrially because of potential microbial growth at this temperature.

WO2008/151807 discloses a hyper-thermostable asparaginase and its use in food production. Such enzyme could possibly be added, e.g., during blanching. Use of a hyper-thermostable asparaginase in the industrial production of French fries is not optimal though, since such enzyme is not active during subsequent steps in the production process which typically take place at lower temperature.

WO 2010/070010 suggests contacting with asparaginase at temperatures as high as 65°C in the presence of, *e.g.,* sodium acid pyrophosphate (SAPP). But even 65°C is not an optimal temperature to be used industrially because of potential microbial growth around this temperature.

US 2007/0141227 A1 discloses contacting of, e.g., potato slices with a leaching solution to extract asparagine. In one embodiment, the post-wash extract which contains leached out components is cooled to prevent the enzyme from becoming inactivated and mixed with asparaginase which removes a majority of the asparagine from the extract.

WO 2007/077546 discloses a method for reducing the level of asparagine in an asparagine-containing food material which comprises heating of the food material followed by cooling to a temperature of less than about 70°C and adding an asparagine reducing enzyme.

It is an object of the present invention to provide an industrially applicable method for producing a heat-treated vegetable-based food product, such as French fries, having a reduced level of acrylamide, where asparaginase treatment of the vegetable-based food material, such as the potato sticks, fits into the existing production process typically applied by the industry.

### SUMMARY OF THE INVENTION

The present invention provides a method for producing a heat-treated vegetable-based food product comprising:
(a) contacting of a vegetable-based food material with asparaginase at a temperature of 67-75°C;
(b) drying the vegetable-based food material at an air temperature of 40 to 90°C; and
(c) heat-treating the asparaginase treated vegetable-based food material to obtain the heat-treated vegetable-based food product;
wherein the asparaginase has a residual activity after 4 hours' incubation in deionised water with 0.5% SAPP at 70°C, pH 5, of at least 20%, preferably at least 40%, more preferably at least 60%, even more preferably at least 80%, of the activity without such incubation; and wherein the asparaginase has an activity at 35°C, pH 6, of at least 20%, preferably at least 30%, more preferably at least 35%, of its activity at 50°C, pH 6.

The invention further relates to use of asparaginase for treatment of a vegetable-based food material at a temperature of 67-75°C; wherein the asparaginase has a residual activity after 4 hours' incubation in deionised water with 0.5% SAPP at 70°C, pH 5, of at least 20%, preferably at least 40%, more preferably at least 60%, even more preferably at least 80%, of the activity without such incubation; and wherein the asparaginase has an activity at 35°C, pH 6, of at least 20%, preferably at least 30%, more preferably at least 35%, of its activity at 50°C, pH 6.

A number of asparaginase enzymes are provided which are stable at high temperature, i.e. they are still active after prolonged incubation at, e.g., 67-75°C, and also retain their activity at lower temperature, e.g., at 40-60°C. However, any asparaginase having such properties would be useful in the method of the present invention.

In the method of the present invention, such asparaginase may be added directly, e.g., to the existing chemical dip in the industrial production process of French fries with no process changes required. In the chemical dip often applied by industry, blanched potato strips may be dipped, e.g., in sodium acid pyrophosphate (SAPP) and optionally glucose to control colour. The temperature of the dipping solution is typically kept around 70°C to avoid microbial infection. The chemical dip is typically followed by a drying step. Although the drying step may be performed at high temperature, such as, e.g., about 85°C, the surface temperature of the potato sticks is only about 40-60°C. In the method of the present invention, the asparaginase is active during the drying step. Thus, full effect of the asparaginase treatment is obtained even if the chemical dip is rather short.

Preferably, the asparaginase is to be active in a pH interval of pH 5-6. pH of a SAPP dipping solution will initially (in pure water) be around 4.8 but gradually increase to 5.5-6 due to buffering from the potatoes.

### DETAILED DESCRIPTION OF THE INVENTION

SEQ ID NO: 1 is the nucleotide sequence of the asparaginase gene from Aspergillus oryzae. Based on N-terminal sequencing of the mature asparaginase encoded, nucleotides 1-78 encodes the signal sequence. SEQ ID NO: 2 is the amino acid sequence of asparaginase from Aspergillus oryzae. Based on N-terminal sequencing, amino acids 1-26 is the signal sequence. SEQ ID NO: 3 is the nucleotide sequence of a gene encoding a variant of Aspergillus oryzae asparaginase having the following substitutions: N70K S307A A323R T327V A349Q S351A V353I. SEQ ID NO: 4 is the amino acid sequence of a variant of Aspergillus oryzae asparaginase having the following substitutions: N70K S307A A323R T327V A349Q S351A V353I. SEQ ID NO: 5 is the nucleotide sequence of a gene encoding a variant of Aspergillus oryzae asparaginase having the following substitutions: N70K A323R T327V A349Q S351A V353I. SEQ ID NO: 6 is the amino acid sequence of a variant of Aspergillus oryzae asparaginase having the following substitutions: N70K A323R T327V A349Q S351A V353I.

The present invention relates to a method for producing a heat-treated vegetable-based food product comprising:
(a) contacting of a vegetable-based food material with asparaginase at a temperature of 67-75°C;
(b) drying the vegetable-based food material under conditions where the asparaginase is active; and
(c) heat-treating the asparaginase treated vegetable-based food material to obtain the heat-treated vegetable-based food product.

The vegetable-based food material may be any food material based on vegetables which is to be heat-treated. It may be derived from a vegetable tuber or root such as but not limited to the group consisting of potato, sweet potato, yams, yam bean, parsnip, parsley root, Jerusalem artichoke, carrot, radish, turnip, and cassava.

The processing of a vegetable tuber or root into a suitable vegetable-based food material may comprise, e.g., rinsing, washing, peeling, cutting, etc., such as to produce tuber or root pieces, e.g., potato pieces, of any size and/or shape, e.g., the form of wedges, sticks or slices, e.g., of a size and shape suitable for further processing into a heat-treated vegetable-based food product such as, e.g., French fries.

In the context of the present invention, French fries is meant to encompass both the final fries ready for consumption and a par-fried pre-product which is to be finally fried or baked before being consumed.

In a preferred embodiment, the vegetable-based food material is a potato material such as potato pieces, e.g., potato wedges, potato sticks or potato slices. In a more preferred embodiment, the vegetable-based food material is potato wedges or potato sticks. In an even more preferred embodiment, the vegetable-based food material is potato sticks and the heat-treated vegetable-based food product is French fries.

Preferably, the vegetable-based food material has been blanched before step (a). Blanching may be performed by any method known in the art, e.g., by wet blanching, steam blanching, microwave blanching or infrared blanching.

In a typical industrial production of French fries, potatoes are initially washed, sorted, steam peeled and cut. Following cutting, the potato sticks are blanched in 2 to 3 sequential steps typically at 65-90°C for 10-30 min. Blanching is done to inactivate the endogenous enzymes in the potato, to partially cook the potato and to leach out reducing sugars to prevent excessive browning of the final product. After blanching, the potato strips may quickly be dipped, e.g. for 20-180 seconds, in a warm phosphate salt solution, e.g., a warm solution of sodium acid pyrophosphate (SAPP), to prevent greying of the final product. The dip is optionally combined with a dip in glucose to control the final colour. The potatoes may be dried in a drier with hot circulating air at 45-95°C for 5-20 minutes giving a weight loss of 5-25%. Finally, the potato sticks are parfried before being quick-frozen and packed. Final frying is done at the restaurant or by consumers.

In the method of the present invention, the contacting with the asparaginase may preferably be combined with dipping in warm phosphate salt solution. I.e., the vegetable based food material, preferably the potato wedges or the potato sticks, more preferably the blanched potato wedges or the blanched potato sticks, is/are dipped or incubated into a solution comprising asparaginase and, e.g., SAPP in one dip bath at a temperature of 67-75°C followed by drying. Alternatively, the contacting may be performed by spraying the vegetable-based food material, preferably the potato wedges or the potato sticks, more preferably the blanched potato wedges or the blanched potato sticks, with a solution comprising asparaginase and, e.g., SAPP at a temperature of 67-75°C followed by drying.

In a preferred embodiment, step (a) of the method of the invention is dipping vegetable based food material, preferably potato wedges or potato sticks, more preferably blanched potato wedges or blanched potato sticks, into an asparaginase solution having a temperature of 67-75°C, preferably 68-72°C, more preferably 70°C. The asparaginase solution may comprise asparaginase at a concentration of 1,000 to 100,000 ASNU/L, preferably 5,000 to 50,000 ASNU/L, more preferably 10,000 to 30,000 ASNU/L.

In a more preferred embodiment, the asparaginase solution further comprises SAPP at a concentration of 0.05 to 5%, preferably 0.1 to 1.5%, more preferably 0.5 to 1%. The asparaginase solution may further comprises glucose, e.g., at a concentration of 0.5 to 2%.

In a preferred embodiment, dipping is performed for a time of 1 second to 10 minutes, preferably 30 seconds to 3 minutes.

The drying in step (b) is to be performed at an air temperature of 40 to 90°C, preferably 55 to 85°C, more preferably 65 to 75°C, i.e. under conditions where the asparaginase is active. Drying may be performed in an oven where temperature, humidity and/or air flow can be adjusted to the level(s) desired. Drying may be performed, e.g., for between 5 and 30 minutes.

Preferably, drying is performed so that the surface temperature of the vegetable-based food material, such as the (blanched) potato wedges or potato sticks, during drying in step (b) is 25 to 60°C, preferably 35 to 50°C.

In a preferred embodiment, the acrylamide content of the heat-treated vegetable-based food product is at least 25% reduced, preferably at least 30%, at least 35%, at least 40%, at least 45% or at least 50% reduced, compared to the acrylamide content of a heat-treated vegetable-based food product produced by a similar method without the addition of asparaginase.

In a more preferred embodiment, the vegetable-based food material is potato sticks, the heat-treated vegetable-based food product is French fries, and the acrylamide content of the French fries is at least 25% reduced, preferably at least 30%, at least 35%, at least 40%, at least 45% or at least 50% reduced, compared to the acrylamide content of French fries produced by a similar method without the addition of asparaginase.

The acrylamide content may be determined by any method known in the art, e.g., by the method described in Example 3.

The invention further relates to a use of asparaginase for treatment of a vegetable-based food material at a temperature of 67-75°C.

An asparaginase in the context of the present invention means an enzyme having asparaginase activity, i.e., an enzyme that catalyzes the hydrolysis of asparagine to aspartic acid (EC 3.5.1.1).

Asparaginase activity may be determined according to one of the asparaginase activity assays described in the Examples, e.g., by the ASNU assay. In one embodiment, an asparaginase to be used in the method of the present invention has at least 20%, e.g., at least 40%, at least 50%, at least 60%, at least 70%, at least 80%, at least 90%, at least 95%, or at least 100% of the asparaginase activity of the mature polypeptide of SEQ ID NO: 2 when measured at pH 7 and at 37°C.

The asparaginase may be a microbial asparaginase, e.g., an asparaginase derived from a bacterium, an archaeon or a fungus. It may be a wild type asparaginase, i.e., an asparaginase found in nature, or it may be a variant asparaginase, i.e., an asparaginase comprising an alteration, i.e., a substitution, insertion, and/or deletion, at one or more (e.g., several) positions compared to a parent asparaginase from which it may have been derived. A substitution means replacement of the amino acid occupying a position with a different amino acid; a deletion means removal of the amino acid occupying a position; and an insertion means adding an amino acid adjacent to and immediately following the amino acid occupying a position.

An asparaginase to be used according to the invention has a residual activity after 4 hours' incubation in deionised water with 0.5% SAPP at 70°C, pH 5, of at least 20%, preferably at least 40%, more preferably at least 60%, even more preferably at least 80%, of the activity without such incubation. The asparaginase activity may be determined by the rASNU assay as described in the Examples. It may be determined at pH 6 and at 37°C.

Preferably, an asparaginase to be used according to the invention has a residual activity after 4 hours' incubation in deionised water with 0.5% SAPP at 72°C, pH 5, of at least 5%, preferably at least 10%, more preferably at least 20%, even more preferably at least 40%, such as at least 60% or at least 80%, of the activity without such incubation.

Preferably, an asparaginase to be used according to the invention has a residual activity after 4 hours' incubation in deionised water with 0.5% SAPP at 74°C, pH 5, of at least 1%, preferably at least 5%, more preferably at least 10%, even more preferably at least 20%, such as at least 40% or at least 60%, of the activity without such incubation.

An asparaginase to be used according to the invention has an activity at 35°C, pH 6, of at least 20%, preferably at least 30%, more preferably at least 35%, of its activity at 50°C, pH 6.

Preferably, the asparaginase has an activity at 70°C, pH 6, of at least 20%, preferably preferably at least 25%, more preferably at least 30%, of its activity at 50°C, pH 6.

More preferably, the asparaginase has (i) an activity at 35°C, pH 6, of at least 20%, preferably at least 30%, more preferably at least 35%, of its activity at 50°C, pH 6, and (ii) an activity at 70°C, pH 6, of at least 20%, preferably at least 25%, more preferably at least 30%, of its activity at 50°C, pH 6.

Preferably, the asparaginase has an activity at pH 5 of at least 20%, preferably at least 30%, more preferably at least 40%, even more preferably at least 50%, of its activity at pH 6.5. The activity may be determined at 50°C.

More preferably, the asparaginase has (i) an activity at 35°C, pH 6, of at least 20%, preferably at least 30%, more preferably at least 35%, of its activity at 50°C, pH 6, (ii) an activity at 70°C, pH 6, of at least 20%, preferably at least 25%, more preferably at least 30%, of its activity at 50°C, pH 6, and (iii) an activity at pH 5, 50°C, of at least 20%, preferably at least 30%, more preferably at least 40%, even more preferably at least 50%, of its activity at pH 6.5, 50°C.

Preferably, the asparaginase has a residual activity after 2 hours' incubation in deionised water with 0.5% SAPP at pH 4 and 70°C of at least 20%, preferably at least 30%, more preferably at least 40%, even more preferably at least 50%, of the activity without such incubation.

In one embodiment, the asparaginase is obtained from, or is a variant of a parent asparaginase obtained from, a microorganism of any genus. For purposes of the present invention, the term "obtained from" as used herein in connection with a given source shall mean that the parent encoded by a polynucleotide is produced by the source or by a strain in which the polynucleotide from the source has been inserted. In one embodiment, the parent is secreted extracellularly.

The asparaginase or its parent may be a fungal asparaginase. It may be a filamentous fungal asparaginase such as an *Acremonium, Agaricus, Alternaria*, *Aspergillus, Aureobasidium, Botryospaeria*, *Botryotinia*, *Ceriporiopsis, Chaetomidium, Chrysosporium, Claviceps*, *Cochliobolus, Coprinopsis*, *Coptotermes*, *Corynascus, Cryphonectria, Cryptococcus, Diplodia*, *Exidia, Filibasidium, Fusarium, Gibberella, Holomastigotoides, Humicola*, *Irpex*, *Lentinula, Leptospaeria, Magnaporthe*, *Melanocarpus, Meripilus, Mucor, Myceliophthora, Neocallimastix*, *Neosartorya*, *Neurospora, Paecilomyces*, *Penicillium*, *Phanerochaete, Piromyces*, *Poitrasia*, *Pseudoplectania, Pseudotrichonympha, Rhizomucor, Schizophyllum*, *Sclerotinia, Scytalidium, Talaromyces*, *Thermoascus, Thielavia, Tolypocladium*, *Trichoderma, Trichophaea, Verticillium, Volvariella,* or *Xylaria* asparaginase.

In one embodiment, the asparaginase or its parent is an *Acremonium cellulolyticus, Aspergillus aculeatus, Aspergillus awamori*, *Aspergillus foetidus*, *Aspergillus fumigatus, Aspergillus japonicus*, *Aspergillus nidulans*, *Aspergillus niger*, *Aspergillus oryzae*, *Aspergillus terreus, Botryotinia fuckeliana*, *Chrysosporium inops*, *Chrysosporium keratinophilum*, *Chrysosporium lucknowense, Chrysosporium merdarium, Chrysosporium pannicola*, *Chrysosporium queenslandicum, Chrysosporium tropicum, Chrysosporium zonatum*, *Fusarium bactridioides*, *Fusarium cerealis*, *Fusarium crookwellense*, *Fusarium culmorum, Fusarium graminearum, Fusarium graminum, Fusarium heterosporum, Fusarium negundi, Fusarium oxysporum*, *Fusarium reticulatum*, *Fusarium roseum, Fusarium sambucinum, Fusarium sarcochroum*, *Fusarium sporotrichioides, Fusarium sulphureum, Fusarium torulosum, Fusarium trichothecioides, Fusarium venenatum, Humicola grisea, Humicola insolens*, *Humicola lanuginosa, Irpex lacteus, Mucor miehei, Myceliophthora thermophila, Neosartorya fischeri, Neurospora crassa, Penicillium chrysogenum, Penicillium citrinum, Penicillium funiculosum, Penicillium purpurogenum, Phanerochaete chrysosporium*, *Sclerotinia sclerotiorum, Thielavia achromatica, Thielavia albomyces, Thielavia albopilosa*, *Thielavia australeinsis*, *Thielavia fimeti*, *Thielavia microspora*, *Thielavia ovispora*, *Thielavia peruviana*, *Thielavia setosa, Thielavia spededonium, Thielavia subthermophila, Thielavia terrestris, Trichoderma harzianum, Trichoderma koningii*, *Trichoderma longibrachiatum, Trichoderma reesei*, or *Trichoderma viride* asparaginase.

In one preferred embodiment, the asparaginase is a variant of a parent asparaginase obtainable from *Aspergillus,* e.g., from *Aspergillus aculeatus, Aspergillus awamori*, *Aspergillus foetidus*, *Aspergillus fumigatus*, *Aspergillus japonicus*, *Aspergillus nidulans*, *Aspergillus niger*, *Aspergillus oryzae* or *Aspergillus terreus.* Preferably, it is a variant having an increased thermostability as compared to its parent. The thermostability may be determined as described in Example 1.

In another preferred embodiment, the asparaginase is a variant of a parent asparaginase obtainable from *Aspergillus oryzae*, e.g., the asparaginase of SEQ ID NO: 2 or the mature polypeptide thereof, or a variant of a parent asparaginase obtainable from *Aspergillus niger*, e.g., the asparaginase disclosed in WO2004/030468.

In another preferred embodiment, the asparaginase has an amino acid sequence which is at least 50% identical to any of SEQ ID NOs: 2 or 4, preferably at least 60%, at least 70%, at least 75%, at least 80%, at least 85%, at least 90%, at least 95% or at least 98% identical to any of SEQ ID NOs: 2 or 4.

In another preferred embodiment, the asparaginase is a variant of a parent asparaginase having an amino acid sequence which is at least 50% identical to any of SEQ ID NOs: 2 or 4, preferably at least 60%, at least 70%, at least 75%, at least 80%, at least 85%, at least 90%, at least 95%, at least 98% or 100% identical to any of SEQ ID NOs: 2 or 4.

In another preferred embodiment, the asparaginase is an asparaginase variant comprising a substitution at one or more positions corresponding to positions 122, 140, 197, 238, 239, 240, 241, 253, 258, 259, 297 or 373 of SEQ ID NO: 2, and having an amino acid sequence which is at least 50% identical to any of SEQ ID NOs: 2 or 4, preferably at least 60%, at least 70%, at least 75%, at least 80%, at least 85%, at least 90%, at least 95% or at least 98% identical to any of SEQ ID NOs: 2 or 4.

In another preferred embodiment, the asparaginase is an asparaginase variant comprising (i) one or more of the following substitutions, wherein each position corresponds to a position in SEQ ID NO: 2: T71C, T74A, T74C, K122A, K122R, V139G, T140D, K194L, D197E, I228M, S238C, N239C, K240R, P241E, K253R, I258V, I258Y, R259C, R259V, S297V, S299A, T314A, P333L, S334P, S334W, E337S, S338G, S338W, G356D, K363R or E373H, or (ii) a deletion at one or more positions corresponding to positions 27, 28 or 29 of SEQ ID NO: 2; wherein the asparaginase variant has an amino acid sequence which is at least 50% identical to any of SEQ ID NOs: 2 or 4, preferably at least 60%, at least 70%, at least 75%, at least 80%, at least 85%, at least 90%, at least 95% or at least 98% identical to any of SEQ ID NOs: 2 or 4.

In another preferred embodiment, the asparaginase is an asparaginase variant comprising (i) one or more of the following substitutions, wherein each position corresponds to a position in SEQ ID NO: 2: T71C, T74A, T74C, K122A, K122R, V139G, T140D, K194L, D197E, I228M, S238C, N239C, K240R, P241 E, K253R, I258V, I258Y, R259C, R259V, S297V, S299A, T314A, P333L, S334P, S334W, E337S, S338G, S338W, G356D, K363R or E373H, or (ii) a deletion at one or more positions corresponding to positions 27, 28 or 29 of SEQ ID NO: 2; wherein the asparaginase variant has an amino acid sequence which is at least 50% identical to SEQ ID NO: 4, preferably at least 60%, at least 70%, at least 75%, at least 80%, at least 85%, at least 90%, at least 95% or at least 98% identical to SEQ ID NO: 4.

In another preferred embodiment, the asparaginase is an asparaginase variant comprising one or more of the following substitutions, wherein each position corresponds to a position in SEQ ID NO: 2: T71C, T74A, T74C, K122A, K122R, V139G, T140D, K194L, D197E, I228M, S238C, N239C, K240R, P241 E, K253R, I258V, I258Y, R259C, R259V, S297V, S299A, T314A, P333L, S334P, S334W, E337S, S338G, S338W, G356D, K363R or E373H; wherein the asparaginase variant has an amino acid sequence which is at least 50% identical to SEQ ID NO: 4, preferably at least 60%, at least 70%, at least 75%, at least 80%, at least 85%, at least 90%, at least 95% or at least 98% identical to SEQ ID NO: 4.

In another preferred embodiment, the asparaginase is an asparaginase variant comprising one or more of the following substitutions, wherein each position corresponds to a position in SEQ ID NO: 2: T74A, K122A, K122R, K194L, K240R, P241E, S299A, S334P, S334W, E337S or S338W; wherein the asparaginase variant has an amino acid sequence which is at least 50% identical to SEQ ID NO: 4, preferably at least 60%, at least 70%, at least 75%, at least 80%, at least 85%, at least 90%, at least 95% or at least 98% identical to SEQ ID NO: 4.

In another preferred embodiment, the asparaginase is an asparaginase variant comprising one or more of the following substitutions, wherein each position corresponds to a position in SEQ ID NO: 2: K122A, K240R, P241E, S299A, S334P, E337S or S338W; wherein the asparaginase variant has an amino acid sequence which is at least 50% identical to SEQ ID NO: 4, preferably at least 60%, at least 70%, at least 75%, at least 80%, at least 85%, at least 90%, at least 95% or at least 98% identical to SEQ ID NO: 4.

In another preferred embodiment, the asparaginase is an asparaginase variant disclosed in Patent Application No. EP12180861 filed 17 August 2012 which is hereby incorporated by reference.

### EXAMPLES

### Materials and Methods

### Asparaginase activity (ASNU) assay

The activity of asparaginase may be measured in ASNU. An asparaginase unit (ASNU) is defined as the amount of enzyme needed to generate 1.0 micromole of ammonia in 1 minute at 37°C and pH 7.0, in 0.1 M MOPS buffer with 9.2 mg/ml asparagine.

Asparaginase hydrolyzes asparagine to aspartic acid and ammonium. The produced ammonium is combined with α-ketoglutarate to form glutamic acid whereby NADH is oxidized to NAD+. The reaction is catalysed by a surplus of glutamate dehydrogenase. The consumption of NADH is measured by photometry at 340 nm. NADH has an absorbance at 340 nm, while NAD+ has no absorbance. A decrease in color is thus measured, and can be correlated to asparaginase activity.

Activity is determined relative to an asparaginase standard of known activity. A commercial product having a declared activity like Acrylaway L may be used as standard.

### Asparaginase activity assay - used in Examples 1 and 2

### Principle:

Asparaginase hydrolyses asparagine to aspartic acid and ammonium. Produced ammonium is determined using Nessler's reagent.

Activity is determined relative to a standard of known activity in ASNU or to a relevant control sample. Activity as determined according to this assay is referred to as nASNU.

### Enzyme incubation:

| | |
|---|---|
| *Temperature* | 37°C |
| *pH* | 6.0 |
| *Buffer* | 20 mM citric acid, pH 6 + 0.001% triton x-100 |
| *Asparagine substrate sol.* | 25 mg/ml in buffer |
| *Stop reagent* | 1.5 M Trichloroacetic acid (TCA) |
| *Enzyme Standard* | 0-20 ASNU/ml |
| | The enzyme dilutions are made in buffer. |
| *Incubation time* | 10 min |

### Procedure:

| | |
|---|---|
| Buffer | 750 µL |
| Asparagine (25 mg/mL) | 100 µL |
| Sample | 100 µL |
| 1.5 M TCA (stop reagent) | 50 µL |
| *Total volume* | *1.000 µL* |

Mix buffer and asparagine and let it equilibrate at 37°C for 10-15min. Add enzyme standard or sample and incubate for 10 min at 37°C. Add TCA to stop the reaction.

### Ammonium determination (Nessler assay):

| | |
|---|---|
| *Temperature* | Ambient |
| *pH* | ∼12, controlled by addition of Nesslers reagent |
| *Nessler's reagent* | Mercury(II)chloride, potassium iodide, potassium hydroxide |
| *Incubation time* | 10 min |
| *A₄₃₆* | Endpoint measurement at 440 nm |

### Procedure:

| | Microtiter plate |
|---|---|
| MQ Water | 140 µL |
| Sample | 20 µL |
| Nessler's reagent | 40 µL |
| *Total volume* | *200 µL* |

| | |
|---|---|
| MQ water, sample and Nessler's reagent is added to the microtiter plate. Shake for 10 sec and then leave to incubate for 10 min before shaking again and reading at 440 nm. | |

### Asparaginase activity assay (rASNU assay) - used in Examples 4, 5, 6 and 7

### Reagents:

- 1 M Potassium phosphate buffer (pH6.0)
   1 M KH₂PO₄ (136g/500ml) + 1 M K₂HPO₄(174g/500ml)
   Adjust to pH 6.0
- 100 mM Potassium phosphate buffer (pH 6.0) + 0.1% tritonX-100 (1 L)
   100 ml 1 M Potassium phosphate buffer (pH 6.0)
   1 g Triton X-100
   Adjust to 1000 ml
- 2 M Hydroxylamine (HA) solution (100 ml)
   13.9 g hydroxylamine
   Adjust to 100 ml with 100 mM potassium phosphate buffer (pH 6)
- Stop solution (500 ml)
   23.83 ml acetate
   13.88 g FeCl₃ 6 H₂O
   84 ml 5 N HCl
   Adjust to 500 ml with H₂O
- Substrate solution (100 ml)
   10 ml 1 M Potassium phosphate buffer
   0.5 g L-asparagine
   5 ml 2 M HA soln.
   Adjust to 100 ml with H₂O

### Activity assay:

- 1: Pipette 20 microL sample into a well.
- 2: Add 100 microL of substrate solution into the well.
- 3: Incubate 20min. at 55°C (or as otherwise indicated).
- 4: Add 100 microL of stop solution into the well.
- 5: Measure A490.

Compare result to that of a control for a relative effect or to a standard of known activity in ASNU. Activity as determined according to this assay is referred to as rASNU.

### Asparaginase enzymes

JN065N2 is a variant of wild type *Aspergillus oryzae* asparaginase described in WO2008110513 having the following amino acid substitutions: N70K A323R T327V A349Q S351A V353I as compared to the amino acid sequence of the wild type.

JN070 is a variant of JN065N2 which further has the amino acid substitution S307A, i.e. it has the following amino acid substitutions as compared to the amino acid sequence of wild type *Aspergillus oryzae* asparaginase: N70K S307A A323R T327V A349Q S351A V353I.

The following variants (Table 0) of JN070 are used in the present Examples. For the avoidance of any possible doubt: E.g., the variant JN102 has the following amino acid substitutions as compared to the amino acid sequence of wild type *Aspergillus oryzae* asparaginase: N70K K122A S307A A323R T327V A349Q S351 A V353I.

**Table 0: Variants of JN070**

| | Substitutions to JN070 |
|---|---|
| JN102 | K122A |
| JN117 | K290V |
| JN135 | S297V S299A |
| JN140 | S334P |
| JN145 | S338W |
| JN148 | K290V S338W |
| JN152 | S299A |
| JN158 | K122A P241E S299A |
| JN159 | K122A K290V S338W |
| JN161 | K122A P241E K290V S299A S338W |
| JN162 | K122A P241E K290V S338W |
| JN165 | K122A S299A S334P |
| JN166 | K122A P241E S334P |
| JN167 | K122A P241E S299A S334P |
| JN168 | K122A K290V S334P S338W |
| JN178 | K122A K240R P241E S299A S334P |
| JN179 | K122A K240R P241E K253R S299A S334P |
| JN180 | K122A K240R P241E S299A S334P E337S |
| JN181 | K122A K240R P241E K253R S299A S334P E337S |
| JN182 | K122A P241E S299A S334P E337S |
| JN183 | K122A P241E S299A S334P S338W |
| JN184 | K122A P241E S299A S334W |
| JN226 | A27* T28* D29* K122A P241E S299A S334P S338W |

### Example 1

### Thermostability in potato blanching water with SAPP

0.5% SAPP was added to potato blanching water (=4 L deionized water which has been used for blanching of 2400 g potatoes at 85°C (16 portions of 150 g for 4 min each)) and pH adjusted to pH 5. This solution is intended to mimic a SAPP solution used for continuous chemical dip treatment of French fries.

The thermostability of the different asparaginase variants was tested in this solution at 70°C: Each asparaginase variant used at an enzyme dose of 10,000 ASNU/L was incubated in 20 ml of potato blanching water with SAPP at 70°C for 4 hrs. Samples were taken every ½-1 hr for a total period of 4 hrs and enzyme activity analysed. Results are shown below.

Table 1: Residual activity after 4 hrs incubation in "potato blanching water with SAPP" at 70°C compared to the initial activity at time 0.

| | % | | % | | % |
|---|---|---|---|---|---|
| Sample | Residual act. | Sample | Residual act. | Sample | Residual act. |
| JN102 | 58 | JN159 | 72 | JN179 | 90 |
| JN117 | 53 | JN161 | 108 | JN180 | 114 |
| JN135 | 100 | JN162 | 124 | JN181 | 84 |
| JN140 | 47 | JN165 | 99 | JN182 | 84 |
| JN145 | 81 | JN166 | 108 | JN183 | 109 |
| JN148 | 71 | JN167 | 103 | JN184 | 100 |
| JN152 | 80 | JN168 | 111 | JN226 | 114 |
| JN158 | 103 | JN178 | 97 | | |

As seen from the table all variants show increased stability at 70°C compared to the wt *Aspergillus oryzae* asparaginase which has <10% residual activity at similar conditions.

### Example 2

### Comparing thermostability of the thermostable variants and the wt enzyme in continuous treatment of French fries for acrylamide mitigation

French fry potatoes (Maris Piper or Bintje) were manually peeled and cut into French fries (size 0.8x0.8x5 cm) using a French fry cutter (Coupe Frites). The potato sticks from the individual potatoes were mixed and held in de-ionized water until use. Portions of 20 g of potato sticks were blanched in two steps; first at 85°C for 4 min (4L deionised water that was reused) and subsequently in 250 ml deionised water at 70°C for 15 minutes (fresh water for each sample). Enzyme treatment was done by holding the blanched potato sticks for 5 min at 70°C in 200 ml enzyme solution (0.5% SAPP in deionised water) dosing 10,000 ASNU/L of the variants or the wt enzyme. Every 5 min a new portion of blanched potato sticks was dipped in the enzyme bath in order to mimic continuous use of the enzyme bath. Samples from the enzyme bath were taken every 30 min for a total period of 4 hours and frozen for later activity analysis.

### Results are shown below.

**Table 2: Residual activity of enzyme solution after 4 hrs continuous use at 70°C of dipping freshly blanched potato strips and holding each portion for 5 min. Residual activity after 4 hrs is calculated as a percentage of the initial measured activity at t=0.**

| | % | | % | | % |
|---|---|---|---|---|---|
| Sample | Residual act. | Sample | Residual act. | Sample | Residual act. |
| JN102 | 81 | JN158 | 112 | JN179 | 111 |
| JN117 | 107 | JN159 | 86 | JN181 | 100 |
| JN135 | 83 | JN161 | 80 | JN182 | 100 |
| JN140 | 73 | JN165 | 122 | JN183 | 108 |
| JN145 | 87 | JN166 | 108 | JN184 | 128 |
| JN148 | 85 | JN167 | 73 | JN226 | 121 |
| JN152 | 77 | JN168 | 80 | wt | 8 |

As seen from the table the variants show a significant increase in stability at 70°C compared to the wt enzyme also under conditions of continuous use in an application set-up.

### Example 3

### Application performance of the thermostable variants in treatment of French fries for acrylamide mitigation

French fry potatoes (Maris Piper or Bintje) were manually peeled and cut into French fries (size 0.8x0.8x5 cm) using a French fry cutter (Coupe Frites). The potato sticks from the individual potatoes were mixed and held in de-ionized water until use. Portions of 75 g potato sticks were blanched in two steps; first at 85°C for 4 min (4L deionised water that was reused) and subsequently in 250 ml de-ionized water at 70°C for 15 minutes (fresh water for each sample). Enzyme treatment was done by dipping the blanched potato sticks for 1 min at 70°C in 250 ml enzyme solution (0.5% Sodium Acid Pyrophosphate, pH 5 in deionised water) using a dosage of 10,000 ASNU/L of the variants. For comparison a control sample dipped in 0.5% SAPP without enzyme was included. Testing of the wt enzyme was done at 55°C to ensure activity. Samples were made in triplicate. After enzyme treatment the potato sticks were dried in a ventilated heating cupboard for 10 min at 85°C, 20% RH (relative humidity), and parfried in vegetable oil for 1 min at 175°C. The samples were blast frozen and finally second fried 3 min at 175°C.

The fries were blended and the acrylamide extracted using acetonitrile and an Automated Solvent Extractor (ASE from Dionex). The extract was treated with Carrez solution I and II (Carrez solution I contains 15 g/100 ml of potassium hexacyanoferrate(II) trihydrate (K₄[Fe(CN)₆] x 3H₂O); Carrez solution II contains 30 g/100 ml of zinc sulfate heptahydrate (ZnSO₄ x 7H₂O)), left overnight in the fridge and filtered using a 0.22 µm filter before HPLC analysis (column: Dionex IonPac ICE-AS1, 9x250 mm, eluent: 5 mM HCl, detection: UV 202 nm). Acrylamide was identified and quantified by comparing with known standards.

### Results are given below.

**Table 3: Calculated reduction in acrylamide formation in final French fries treated with the different variants at a fixed dose of 10,000 ASNU/L and a dip temperature of 70°C. Reduction is calculated by comparing to a control sample dipped in SAPP without enzyme. For the wt enzyme treatment was done at a dip temperature of 55 and 70°C. Duplicate numbers are from separate repeated trials.**

| Treatment | Reduction vs. Control sample, % |
|---|---|
| Control | 0 |
| wt (55°C) | 45 |
| wt (70°C) | 1 |
| JN135 | 53 |
| JN140 | 55 |
| JN145 | 35 |
| JN152 | 54/50 |
| JN158 | 52 |
| JN159 | 49 |
| JN161 | 41 |
| JN165 | 37 |
| JN166 | 36 |
| JN167 | 46 |
| JN168 | 42 |
| JN178 | 41 |
| JN179 | 51 |
| JN180 | 52 |
| JN181 | 51/51 |
| JN182 | 51/49 |
| JN183 | 48 |
| JN184 | 47 |
| JN226 | 61 |

Acrylamide in the final French fry product has been reduced by approximately 50% showing that the variants are active in the application. For the wildtype enzyme the achieved reductions in acrylamide levels were 45% at 55°C and 1% at 70°C.

### Example 4

### Temperature activity

Purified enzyme was diluted with 20 mM sodium acetate buffer pH 5.5 to a concentration around 2 rASNU/ml. Ten microliters of enzyme solution was added to 100 microL of substrate solution, which has been pre-incubated at different temperature, of rASNU assay in a 96-well PCR plate and incubated for 20 min. The reaction was stopped by adding 100 microL of stop solution and the absorbance at 490 nm was measured.

**Table 4: Temperature activity in percentage of activity at 50°C**

| Variant No. | Thermoactivity (100% @ 50°C) | | |
|---|---|---|---|
| | 35°C | 60°C | 70°C |
| WT | 78% | 64% | 4% |
| JN065 | 67% | 68% | 24% |
| JN070 | 64% | 68% | 25% |
| JN117 | 63% | 69% | 30% |
| JN135 | 79% | 72% | 29% |
| JN140 | 69% | 67% | 34% |
| JN145 | 72% | 68% | 25% |
| JN148 | 67% | 75% | 29% |
| JN152 | 57% | 79% | 35% |
| JN158 | 51% | 79% | 38% |
| JN159 | 67% | 68% | 27% |
| JN161 | 51% | 82% | 39% |
| JN162 | 63% | 73% | 31% |
| JN165 | 55% | 77% | 38% |
| JN166 | 63% | 69% | 30% |
| JN167 | 53% | 83% | 42% |
| JN168 | 71% | 71% | 31% |
| JN178 | 50% | 83% | 42% |
| JN179 | 45% | 83% | 41% |
| JN180 | 39% | 92% | 51% |
| JN181 | 38% | 96% | 52% |
| JN182 | 41% | 92% | 50% |
| JN183 | 57% | 77% | 37% |
| JN184 | 58% | 92% | 46% |
| JN226 | 59% | 84% | 41% |

### Example 5

### pH activity

Purified enzymes were diluted with 20 mM sodium acetate buffer pH 5.5 to a concentration around 2 rASNU/ml. Ten microliters of enzyme solution was added to 100 microL of preincubated substrate solution with different pH constructed by mixing 2-fold substrate solution of rASNU assay and equal volume of 200 mM Britton-Robinson buffer (pH 2.5 - 11.5). After 20 min incubation at 50°C, the reaction was stopped by adding 100 microL of stop solution and the absorbance at 490 nm was measured.

**Table 5: pH activity**

| Variant No. | pH activity |
|---|---|
| | pH5/pH6.5 @ 50°C |
| WT | 36% |
| JN065 | 41% |
| JN070 | 44% |
| JN102 | 45% |
| JN117 | 47% |
| JN135 | 29% |
| JN140 | 50% |
| JN145 | 43% |
| JN148 | 44% |
| JN152 | 52% |
| JN158 | 53% |
| JN159 | 45% |
| JN161 | 55% |
| JN162 | 45% |
| JN165 | 61% |
| JN166 | 51% |
| JN167 | 59% |
| JN168 | 53% |
| JN178 | 59% |
| JN179 | 57% |
| JN180 | 64% |
| JN181 | 62% |
| JN182 | 58% |
| JN183 | 60% |
| JN184 | 55% |
| JN226 | 62% |

### Example 6

### pH stability at 70°C

Purified enzyme was diluted with 0.5% SAPP pH 4.0 - 7.0 (pH was adjusted using HCl or NaOH) to a concentration around 6 rASNU/ml. Fifty microliters of diluted enzyme solution was transferred to 96-well PCR plate and incubated at 70°C for 2 hours. Immediately after incubation, 10 microL of incubated solution was added to 100 microL of preincubated substrate solution of rASNU assay in a 96-well plate and incubated at 50°C for 20 min. The reaction was stopped by adding 100 microL of stop solution and the absorbance at 490 nm was measured. The residual activity was determined using the activity of a similar sample incubated at 25°C as a control.

**Table 6: pH stability**

| Variant No. | pH stability @70°C, 2h | | | |
|---|---|---|---|---|
| | pH4 | pH5 | pH6 | pH7 |
| WT | 0% | 0% | 0% | 0% |
| JN065 | 10% | 12% | 0% | 0% |
| JN070 | 68% | 55% | 0% | 0% |
| JN102 | 62% | 64% | 0% | 0% |
| JN117 | 77% | 78% | 0% | 0% |
| JN135 | 93% | 94% | 10% | 0% |
| JN140 | 74% | 77% | 28% | 0% |
| JN145 | 93% | 99% | 46% | 0% |
| JN148 | 77% | 80% | 44% | 0% |
| JN152 | 91% | 92% | 27% | 0% |
| JN158 | 93% | 98% | 73% | 0% |
| JN159 | 87% | 91% | 69% | 0% |
| JN161 | 98% | 100% | 94% | 74% |
| JN162 | 98% | 102% | 93% | 1% |
| JN165 | 98% | 100% | 84% | 2% |
| JN166 | 95% | 98% | 81% | 0% |
| JN167 | 105% | 103% | 92% | 40% |
| JN168 | 108% | 105% | 95% | 12% |
| JN178 | 105% | 106% | 99% | 37% |
| JN179 | 109% | 104% | 94% | 4% |
| JN180 | 109% | 116% | 102% | 74% |
| JN181 | 110% | 112% | 100% | 38% |
| JN182 | 109% | 112% | 101% | 74% |
| JN183 | 106% | 104% | 98% | 75% |
| JN184 | 94% | 84% | 54% | 0% |
| JN226 | 99% | 99% | 92% | 80% |

### Example 7

### Enzyme thermostability in 0.5% SAPP

Purified enzyme was diluted with 0.5% sodium dihydrogen pyrophosphate (SAPP) pH 5.0 to a concentration around 6 rASNU/ml. Fifty microliters of diluted enzyme solution was transferred to a 96-well PCR plate and incubated at 70 - 80°C for 4 hours by using a thermal cycler. Immediately after incubation, 10 microL of incubated solution was added to 100 microL of pre-incubated substrate solution of rASNU assay in a 96-well plate and incubated at 37 or 50°C for 20 min. The reaction was stopped by adding 100 microL of stop solution and the absorbance at 490 nm was measured. The residual activity was determined using the activity of a similar sample incubated at 25°C as a control.

**TABLE 7 Residual activity after 4 hours**

| Variant No. | residual after 4h in 0.5% SAPP, pH5 | | | | | |
|---|---|---|---|---|---|---|
| | 70 °C | 72 °C | 74 °C | 76 °C | 78 °C | 80 °C |
| WT | 1% | 1% | | | | |
| JN065 | 1% | 2% | | | | |
| JN070 | 35% | 1% | 2% | 1% | 1% | |
| JN102 | 53% | 6% | 2% | 2% | 1% | |
| JN117 | 61% | 6% | 1% | 1% | 1% | |
| JN135 | 88% | 72% | 21% | 1% | 1% | |
| JN140 | 67% | 52% | 21% | 2% | 1% | |
| JN145 | 90% | 71% | 17% | 2% | 1% | |
| JN148 | 74% | 62% | 26% | 2% | 1% | |
| JN152 | 79% | 67% | 25% | 0% | 0% | |
| JN158 | 93% | 79% | 67% | 43% | 2% | |
| JN159 | 86% | 75% | 47% | 3% | 0% | |
| JN161 | 100% | 99% | 95% | 77% | 71% | |
| JN162 | 102% | 97% | 91% | 50% | 1% | |
| JN165 | 98% | 92% | 80% | 64% | 37% | |
| JN166 | 100% | 95% | 85% | 61% | 9% | |
| JN167 | 103% | 101% | 97% | 82% | 68% | |
| JN168 | 104% | 97% | 87% | 72% | 25% | |
| JN178 | 103% | 103% | 99% | 92% | 78% | 33% |
| JN179 | 93% | 87% | 81% | 74% | 53% | 10% |
| JN180 | 100% | 106% | 104% | 96% | 83% | 64% |
| JN181 | 100% | 100% | 96% | 87% | 72% | 35% |
| JN182 | 101% | 102% | 99% | 94% | 76% | 59% |
| JN183 | 99% | 100% | 98% | 94% | 76% | 62% |
| JN184 | 94% | 87% | 64% | 48% | 22% | 0% |
| JN226 | 100% | 103% | 102% | 96% | 90% | 76% |

## Claims

1. A method for producing a heat-treated vegetable-based food product comprising:
(a) contacting of a vegetable-based food material with asparaginase at a temperature of 67-75°C;
(b) drying the vegetable-based food material at an air temperature of 40 to 90°C; and
(c) heat-treating the asparaginase treated vegetable-based food material to obtain the heat-treated vegetable-based food product;
wherein the asparaginase has a residual activity after 4 hours' incubation in deionised water with 0.5% SAPP at 70°C, pH 5, of at least 20%, preferably at least 40%, more preferably at least 60%, even more preferably at least 80%, of the activity without such incubation; and wherein the asparaginase has an activity at 35°C, pH 6, of at least 20%, preferably at least 30%, more preferably at least 35%, of its activity at 50°C, pH 6.

2. The method of claim 1 wherein the vegetable-based food material is potato sticks and the heat-treated vegetable-based food product is French fries.

3. The method of any one of the preceding claims wherein step (a) is dipping vegetable-based food material into an asparaginase solution having a temperature of 67-75°C, preferably 68-72°C, more preferably 70°C.

4. The method of claim 3 wherein the asparaginase solution comprises asparaginase at a concentration of 1,000 to 100,000 ASNU/L, preferably 5,000 to 50,000 ASNU/L, more preferably 10,000 to 30,000 ASNU/L.

5. The method of claim 4 wherein the asparaginase solution further comprises sodium acid pyrophosphate at a concentration of 0.05 to 5%, preferably 0.1 to 1.5%, more preferably 0.5 to 1%.

6. The method of any one of claims 3-5 wherein the dipping is for a time of 1 second to 10 minutes, preferably 30 seconds to 3 minutes.

7. The method of any one of the preceding claims wherein the vegetable-based food material has been blanched prior to step (a).

8. The method of any one of the preceding claims wherein the drying in step (b) is performed at an air temperature of 55 to 85°C, preferably 65 to 75°C.

9. The method of any one of the preceding claims wherein the surface temperature of the vegetable-based food material during drying in step (b) is 25 to 60°C, preferably 35 to 50°C.

10. The method of any one of the preceding claims wherein the drying in step (b) is performed for between 5 and 30 minutes.

11. The method of any one of the preceding claims wherein the acrylamide content of the heat-treated vegetable-based food product is at least 25% reduced, preferably at least 30%, at least 35%, at least 40%, at least 45% or at least 50% reduced, compared to the acrylamide content of a heat-treated vegetable-based food product produced by a similar method without the addition of asparaginase.

12. Use of asparaginase for treatment of a vegetable-based food material at a temperature of 67-75°C; wherein the asparaginase has a residual activity after 4 hours' incubation in deionised water with 0.5% SAPP at 70°C, pH 5, of at least 20%, preferably at least 40%, more preferably at least 60%, even more preferably at least 80%, of the activity without such incubation; and wherein the asparaginase has an activity at 35°C, pH 6, of at least 20%, preferably at least 30%, more preferably at least 35%, of its activity at 50°C, pH 6.

13. The method of any one of claims 1-11 or the use of claim 12 wherein the asparaginase has an activity at 70°C, pH 6, of at least 20%, preferably at least 25%, more preferably at least 30%, of its activity at 50°C, pH 6.

14. The method of any one of claims 1-11 or 13 or the use of any one of claims 12-13 wherein the asparaginase is an asparaginase variant comprising a substitution at one or more positions corresponding to positions 122, 140, 197, 238, 239, 240, 241, 253, 258, 259, 297 or 373 of SEQ ID NO: 2, and having an amino acid sequence which is at least 50% identical to any of SEQ ID NOs: 2 or 4.

15. The method of any one of claims 1-11 or 13 or the use of any one of claims 12-13 wherein the asparaginase is an asparaginase variant comprising (i) one or more of the following substitutions, wherein each position corresponds to a position in SEQ ID NO: 2: T71C, T74A, T74C, K122A, K122R, V139G, T140D, K194L, D197E, I228M, S238C, N239C, K240R, P241E, K253R, I258V, I258Y, R259C, R259V, S297V, S299A, T314A, P333L, S334P, S334W, E337S, S338G, S338W, G356D, K363R or E373H, or (ii) a deletion at one or more positions corresponding to positions 27, 28 or 29 of SEQ ID NO: 2; wherein the asparaginase variant has an amino acid sequence which is at least 50% identical to any of SEQ ID NOs: 2 or 4, preferably at least 60%, at least 70%, at least 75%, at least 80%, at least 85%, at least 90%, at least 95% or at least 98% identical to any of SEQ ID NOs: 2 or 4.

## Patentansprüche

1. Verfahren zur Herstellung eines hitzebehandelten Nahrungsmittelprodukts auf Pflanzenbasis, umfassend:
a) Inkontaktbringen eines Nahrungsmittelmaterials auf Pflanzenbasis mit Asparaginase bei einer Temperatur von 67-75°C;
b) Trocknen des Nahrungsmittelmaterials auf Pflanzenbasis bei einer Lufttemperatur von 40 bis 90°C; und
c) Hitzebehandeln des mit Asparaginase behandelten Nahrungsmittelmaterials auf Pflanzenbasis, wodurch man zu dem hitzebehandelten Nahrungsmittelprodukt auf Pflanzenbasis gelangt;
wobei die Asparaginase nach vierstündiger Inkubation in entionisiertem Wasser mit 0,5% SAPP bei 70°C, pH 5, eine Restaktivität von mindestens 20%, vorzugsweise mindestens 40%, stärker bevorzugt mindestens 60%, noch stärker bevorzugt mindestens 80%, der Aktivität ohne solch eine Inkubation aufweist; und
wobei die Asparaginase eine Aktivität bei 35°C, pH 6, von mindestens 20%, vorzugsweise mindestens 30%, stärker bevorzugt mindestens 35%, ihrer Aktivität bei 50°C, pH 6, aufweist.

2. Verfahren nach Anspruch 1, wobei es sich bei dem Nahrungsmittelmaterial auf Pflanzenbasis um Kartoffelstäbchen und bei dem hitzebehandelten Nahrungsmittelprodukt auf Pflanzenbasis um Pommes Frites handelt.

3. Verfahren nach einem der vorhergehenden Ansprüche, wobei Schritt (a) das Tauchen eines Nahrungsmittelmaterials auf Pflanzenbasis in eine Asparaginaselösung mit einer Temperatur von 67-75°C, vorzugsweise 68-72°C, stärker bevorzugt 70°C, ist.

4. Verfahren nach Anspruch 3, wobei die Asparaginaselösung Asparaginase in einer Konzentration von 1000 bis 100000 ASNU/L, vorzugsweise 5000 bis 50000 ASNU/L, stärker bevorzugt 10000 bis 30000 ASNU/L, umfasst.

5. Verfahren nach Anspruch 4, wobei die Asparaginaselösung weiterhin Natriumdihydrogenpyrophosphat in einer Konzentration von 0,05 bis 5%, vorzugsweise 0,1 bis 1,5%, stärker bevorzugt 0,5 bis 1%, umfasst.

6. Verfahren nach einem der Ansprüche 3-5, wobei das Tauchen über einen Zeitraum von 1 Sekunde bis 10 Minuten, vorzugsweise 30 Sekunden bis 3 Minuten, erfolgt.

7. Verfahren nach einem der vorhergehenden Ansprüche, wobei das Nahrungsmittelmaterial auf Pflanzenbasis vor Schritt (a) blanchiert worden ist.

8. Verfahren nach einem der vorhergehenden Ansprüche, wobei das Trocknen in Schritt (b) bei einer Lufttemperatur von 55 bis 85°C, vorzugsweise 65 bis 75°C, erfolgt.

9. Verfahren nach einem der vorhergehenden Ansprüche, wobei die Oberflächentemperatur des Nahrungsmittelmaterials auf Pflanzenbasis während des Trocknens in Schritt (b) 25 bis 60°C, vorzugsweise 35 bis 50°C, beträgt.

10. Verfahren nach einem der vorhergehenden Ansprüche, wobei das Trocknen in Schritt (b) über einen Zeitraum von zwischen 5 und 30 Minuten erfolgt.

11. Verfahren nach einem der vorhergehenden Ansprüche, wobei der Acrylamidgehalt des hitzebehandelten Nahrungsmittelprodukts auf Pflanzenbasis im Vergleich zu dem Acrylamidgehalt eines hitzebehandelten Nahrungsmittelprodukts auf Pflanzenbasis, das mit einem ähnlichen Verfahren ohne Zugabe von Asparaginase erzeugt worden ist, um mindestens 25%, vorzugsweise um mindestens 30%, mindestens 35%, mindestens 40%, mindestens 45% oder mindestens 50% vermindert ist.

12. Verwendung von Asparaginase für die Behandlung eines Nahrungsmittelmaterials auf Pflanzenbasis bei einer Temperatur von 67-75°C; wobei die Asparaginase nach vierstündiger Inkubation in entionisiertem Wasser mit 0,5% SAPP bei 70°C, pH 5, eine Restaktivität von mindestens 20%, vorzugsweise mindestens 40%, stärker bevorzugt mindestens 60%, noch stärker bevorzugt mindestens 80%, der Aktivität ohne solch eine Inkubation aufweist; und wobei die Asparaginase eine Aktivität bei 35°C, pH 6, von mindestens 20%, vorzugsweise mindestens 30%, stärker bevorzugt mindestens 35%, ihrer Aktivität bei 50°C, pH 6, aufweist.

13. Verfahren nach einem der Ansprüche 1-11 oder Verwendung nach Anspruch 12, wobei die Asparaginase eine Aktivität bei 70°C, pH 6, von mindestens 20%, vorzugsweise mindestens 25%, stärker bevorzugt mindestens 30%, ihrer Aktivität bei 50°C, pH 6, aufweist.

14. Verfahren nach einem der Ansprüche 1-11 oder 13 oder Verwendung nach einem der Ansprüche 12-13, wobei es sich bei der Asparaginase um eine Asparaginasevariante handelt, die eine Substitution an einer oder mehreren Positionen entsprechend den Positionen 122, 140, 197, 238, 239, 240, 241, 253, 258, 259, 297 oder 373 von SEQ ID NO: 2 umfasst und eine Aminosäuresequenz aufweist, die zu mindestens 50% zu einer der SEQ ID NO: 2 oder 4 identisch ist.

15. Verfahren nach einem der Ansprüche 1-11 oder 13 oder Verwendung nach einem der Ansprüche 12-13, wobei es sich bei der Asparaginase um eine Asparaginasevariante handelt, die (i) eine oder mehrere der folgenden Substitutionen umfasst, wobei jede Position einer Position in SEQ ID NO: 2 entspricht: T71C, T74A, T74C, K122A, K122R, V139G, T140D, K194L, D197E, I228M, S238C, N239C, K240R, P241E, K253R, I258V, I258Y, R259C, R259V, S297V, S299A, T314A, P333L, S334P, S334W, E337S, S338G, S338W, G356D, K363R oder E373H, oder (ii) eine Deletion an einer oder mehreren Positionen entsprechend den Positionen 27, 28 oder 29 von SEQ ID NO: 2 umfasst; wobei die Asparaginasevariante eine Aminosäuresequenz aufweist, die zu mindestens 50% zu einer der SEQ ID NO: 2 oder 4 identisch ist, vorzugsweise zu mindestens 60%, mindestens 70%, mindestens 75%, mindestens 80%, mindestens 85%, mindestens 90%, mindestens 95% oder mindestens 98% zu einer der SEQ ID NO: 2 oder 4 identisch ist.

## Revendications

1. Procédé de production d'un produit alimentaire à base de légumes thermo-traité, comprenant les étapes consistant à :
(a) mettre en contact un matériel alimentaire à base de légumes avec une asparaginase à une température de 67 à 75°C ;
(b) sécher le matériel alimentaire à base de légumes à une température de l'air de 40 à 90°C ; et
(c) traiter par la chaleur le matériel alimentaire à base de légumes traité avec une asparaginase afin d'obtenir le produit alimentaire à base de légumes thermo-traité ;
dans lequel l'asparaginase a une activité résiduelle, après 4 heures d'incubation dans de l'eau désionisée, avec du SAPP à 0,5% à 70°C, pH 5, d'au moins 20%, de préférence d'au moins 40%, mieux préféré d'au moins 60%, même mieux préféré d'au moins 80% de l'activité sans une telle incubation ; et
dans lequel l'asparaginase a une activité à 35°C, pH 6, d'au moins 20%, de préférence d'au moins 30%, mieux préféré d'au moins 35% de son activité à 50°C, pH 6.

2. Procédé selon la revendication 1, dans laquelle le matériel alimentaire à base de légumes ce sont des bâtonnets de pomme de terre et le produit alimentaire à base de légumes thermo-traité ce sont des frites.

3. Procédé selon l'une quelconque des revendications précédentes, dans laquelle l'étape (a) est une immersion du matériel alimentaire à base de légumes dans une solution d'asparaginase ayant une température de 67 à 75°C, de préférence de 68 à 72°C, mieux préféré de 70°C.

4. Procédé selon la revendication 3, dans laquelle la solution d'asparaginase comprend une asparaginase à une concentration de 1 000 à 100 000 ASNU/L, de préférence de 5 000 à 50 000 ASNU/L, mieux préféré de 10 000 à 30 000 ASNU/L.

5. Procédé selon la revendication 4, dans laquelle la solution d'asparaginase comprend en outre du pyrophosphate acide de sodium à une concentration de 0,05 à 5%, de préférence de 0,1 à 1,5%, mieux préféré de 0,5 à 1%.

6. Procédé selon l'une quelconque des revendications 3 à 5, dans laquelle l'immersion a lieu pendant une durée de 1 seconde à 10 minutes, de préférence de 30 secondes à 3 minutes.

7. Procédé selon l'une quelconque des revendications précédentes, dans laquelle le matériel alimentaire à base de légumes a été blanchi avant l'étape (a).

8. Procédé selon l'une quelconque des revendications précédentes, dans laquelle le séchage dans l'étape (b) est effectué à une température de l'air de 55 à 85°C, de préférence de 65 à 75°C.

9. Procédé selon l'une quelconque des revendications précédentes, dans laquelle la température de surface du matériel alimentaire à base de légumes lors du séchage dans l'étape (b) est de 25 à 60°C, de préférence de 35 à 50°C.

10. Procédé selon l'une quelconque des revendications précédentes, dans laquelle le séchage dans l'étape (b) est effectué pendant un temps compris entre 5 et 30 minutes.

11. Procédé selon l'une quelconque des revendications précédentes, dans laquelle la teneur d'acrylamide du produit alimentaire à base de légumes thermo-traité est réduite d'au moins 25%, de préférence réduite d'au moins 30%, d'au moins 35%, d'au moins 40%, d'au moins 45% ou d'au moins 50%, en comparaison avec la teneur d'acrylamide d'un produit alimentaire à base de légumes thermo-traité produit par un procédé semblable sans l'ajout d'asparaginase.

12. Utilisation d'une asparaginase pour le traitement d'un matériel alimentaire à base de légumes à une température de 67 à 75°C ; dans laquelle l'asparaginase a une activité résiduelle après 4 heures d'incubation dans de l'eau désionisée, avec du SAPP à 0,5% à 70°C, pH 5, d'au moins 20%, de préférence d'au moins 40%, mieux préféré d'au moins 60%, même mieux préféré d'au moins 80% de l'activité sans une telle incubation ; et dans laquelle l'asparaginase a une activité à 35°C, pH 6, d'au moins 20%, de préférence d'au moins 30%, mieux préféré d'au moins 35% de son activité à 50°C, pH 6.

13. Procédé, selon l'une quelconque des revendications 1 à 11, ou utilisation, selon la revendication 12, dans laquelle l'asparaginase a une activité à 70°C, pH 6, d'au moins 20%, de préférence d'au moins 25%, mieux préféré d'au moins 30% de son activité à 50°C, pH 6.

14. Procédé, selon l'une quelconque des revendications 1 à 11 ou 13, ou utilisation, selon l'une quelconque des revendications 12-13, dans laquelle l'asparaginase est un variant d'asparaginase comprenant une substitution en une ou plusieurs position(s) correspondant aux positions 122, 140, 197, 238, 239, 240, 241, 253, 258, 259, 297 ou 373 de la SEQ ID n° : 2, et ayant une séquence d'acides aminés qui est identique, au moins à 50%, à n'importe laquelle des SEQ ID n° : 2 ou 4.

15. Procédé, selon l'une quelconque des revendications 1 à 11 ou 13, ou utilisation, selon l'une quelconque des revendications 12-13, dans laquelle l'asparaginase est un variant d'asparaginase comprenant (i) une ou plusieurs substitution(s) parmi les suivantes, dans lesquelles chaque position correspond à une position dans la SEQ ID n° : 2 : T71C, T74A, T74C, K122A, K122R, V139G, T140D, K194L, D197E, I228M, S238C, N239C, K240R, P241E, K253R, I258V, I258Y, R259C, R259V, S297V, S299A, T314A, P333L, S334P, S334W, E337S, S338G, S338W, G356D, K363R ou E373H, ou (ii) une délétion au niveau d'une ou plusieurs position(s) correspondant aux positions 27, 28 ou 29 de la SEQ ID n° : 2 ; dans laquelle le variant d'asparaginase a une séquence d'acides aminés qui est identique, au moins à 50%, à n'importe laquelle des SEQ ID n° : 2 ou 4, de préférence au moins à 60%, au moins à 70%, au moins à 75%, au moins à 80%, au moins à 85%, au moins à 90%, au moins à 95% ou au moins à 98%, à n'importe laquelle des SEQ ID n° : 2 ou 4.
